# FASCICULE DE BREVET EUROPEEN

(11) **EP 2 110 583 B1**
(45) Date de publication et mention de la délivrance du brevet: **17.10.2012**
(21) Numéro de dépôt: 09290281.6
(22) Date de dépôt: 16.04.2009
(51) Int. Cl.: F16J 15/02, F16J 15/32, F16J 15/56, F16L 21/03, F16L 23/22

(54) **Joint d'étanchéité amélioré et utilisations d'un tel joint**
Verbesserte Dichtung und Anwendungen einer solchen Dichtung
Improved sealing gasket and uses of such a gasket

(30) Priorité: 18.04.2008 FR 0802176
(43) Date de publication de la demande: 21.10.2009
(73) Titulaire: LE JOINT FRANCAIS, 75008 Paris (FR)
(72) Inventeur: Pradelle, Sébastien, 53170 Maisoncelles du Maine (FR)
(74) Mandataire: Corret, Hélène

(56) Documents cités:
- DE-U1- 7 814 685
- DE-U1- 29 712 416
- DE-U1- 29 720 908
- FR-A- 2 764 033
- GB-A- 814 265
- US-A- 5 735 531

## Description

La présente invention se rapporte à un joint d'étanchéité amélioré et à des utilisations d'un tel joint.

L'industrie automobile doit faire face à de nombreux problèmes techniques impliquant des joints.

Un premier problème est posé par la mise en place de nouvelles normes environnementales qui imposent une forte réduction des taux de fuites, par exemple dans les circuits de fluide, dans les réservoirs, etc. Une composante de la « fuite » est due à la perméabilité des joints d'étanchéité vis-à-vis du fluide à étancher. Certaines applications sont particulièrement concernées car la fuite mesurée est essentiellement due à la perméabilité du joint d'étanchéité. Les applications concernées sont, par exemple, le circuit carburant (étanchéité de réservoir, des connexions, etc.), le circuit urée, la climatisation ou toute autre application dans laquelle le fluide peut être en phase gazeuse. Certaines applications sont plus critiques de part la dimension des connecteurs, comme les étanchéités de réservoir ou les joints de tubulure de remplissage de réservoir.

Un connecteur comprend une pièce mâle et une pièce femelle. Le joint d'étanchéité présente un axe de révolution R et un axe transversal T. Le joint est généralement monté dans une gorge ouverte de la pièce mâle pour un serrage axial contre un épaulement de la pièce femelle, c'est-à-dire sensiblement parallèlement à l'axe de révolution R. Ainsi, la partie proximale du joint, qui est la plus proche du centre du joint, est en contact avec le fond de la gorge de la partie mâle. La partie distale du joint, qui est la plus éloignée du centre du joint, entre en contact avec la pièce femelle.

Le serrage comprend donc une composante essentiellement axiale, c'est-à-dire sensiblement parallèlement à l'axe de révolution R. Dans la pratique, compte-tenu des tolérances dimensionnelles parfois importantes, le serrage comprend également une composante radiale non négligeable. Autrement dit, lorsque les deux parties du connecteur sont rapprochées l'une de l'autre axialement, elles peuvent se décaler radialement, c'est-à-dire sensiblement parallèlement à l'axe transversal.

De nombreuses pièces de ces circuits sont en plastique et, notamment, les pièces destinées à recevoir les joints d'étanchéité. Il n'est donc pas possible d'améliorer l'étanchéité de ces circuits en augmentant la compression des joints sans risquer de déformer ces pièces en plastique ou de les endommager. La conséquence de cette compression serait une perte de l'étanchéité, c'est-à-dire une augmentation de la perméabilité.

Or, le joint le plus couramment utilisé dans ces connecteurs est le joint torique en raison de son faible coût. Cependant, l'emboîtement d'un connecteur équipé d'un tel joint nécessite des efforts importants, notamment lorsque la dimension du joint et/ou son serrage augmentent.

Le joint torique présente aussi l'inconvénient d'être sensible au phénomène de « roll-back ». En effet, lorsqu'il est monté dans une gorge pour un serrage axial, il subit, généralement, une légère extension qui rend le joint torique instable dans sa gorge. Si, compte-tenu des tolérances dimensionnelles importantes, cette gorge ne présente pas une hauteur suffisante, la légère extension du joint combinée, par exemple, à des vibrations de la chaîne d'assemblage, conduit à une torsion du joint pouvant entrainer sa sortie (roll-back) de la gorge. L'emboîtement des pièces est alors impossible et le montage doit être écarté de la chaîne de montage. De plus, le joint torique ne répond plus aux exigences en termes de perméabilité.

Une amélioration consiste à réaliser un joint dont le profil est en D, ce qui limite le phénomène de roll-back car la partie plane du joint en D est plaquée contre le fond de la gorge. Cependant, les efforts nécessaires à l'écrasement du joint restent élevés. En outre, ce joint est sensible à un phénomène de basculement lorsque le serrage comprend une composante radiale non négligeable. Ainsi, lors de la phase de serrage, le joint en D peut basculer dans la gorge de sorte que la partie plane se trouve en regard de la pièce ne portant pas le joint, diminuant ainsi la force de pression du joint et, par conséquent, l'étanchéité de l'ensemble.

Les joints à lèvres classiques ou profilés présentent un coût de fabrication généralement élevé et nécessitent un logement complexe. Par ailleurs, la finesse des lèvres les rend plus sensibles au vieillissement. Le document GB 814,265 montre un joint annulaire présentant une face intérieure, une face extérieure portant deux lèvres, et deux faces latérales comprenant chacune un lobe disosé dans le prolongement de la face intérieure.

Le document DE10043280 décrit un joint destiné à être comprimé uniquement selon un mode radial. Aucune zone du joint n'est prévue pour fléchir. Le joint présente une zone centrale portant du côté droit deux lèvres, et du côté gauche trois lèvres.

Enfin, il a également été proposé un joint au profil en H, insensible au phénomène de roll-black. Il ne peut théoriquement pas vriller lors du montage. Ses inconvénients sont le coût et les efforts élevés nécessaires à l'écrasement du joint lors du montage.

Un autre problème technique est relatif à l'amélioration de l'étanchéité radiale d'un piston hydraulique à haute pression en utilisation et à l'amélioration du rappel du piston dans sa position initiale.

Un tel problème se pose pour le piston hydraulique de serrage des plaquettes de frein contre le disque d'une roue. Ce piston est déplacé dans une chambre, d'une position de repos à une position de freinage.

Un joint est monté pour un serrage radial dans une gorge de la chambre pour assurer l'étanchéité hydraulique et éviter que du liquide hydraulique ne s'échappe de la chambre lors du freinage. Avec ce montage, la partie proximale du joint, qui est la plus proche du centre du joint, entre en contact avec le piston (pièce mâle). La partie distale du joint, qui est la plus éloignée du centre du joint, est en contact avec le fond de la gorge de la chambre (pièce femelle). Le serrage du joint entre la chambre et le piston est essentiellement radiale, c'est-à-dire sensiblement parallèlement à l'axe transversal T.

Lorsque le conducteur appuie sur la pédale de frein, cela augmente la pression hydraulique et le piston se déplace, appliquant les plaquettes de frein contre le disque de la roue. Lors de cette phase, le joint est soumis à des pressions radiales importantes pouvant être supérieures à 70 bar.

Lorsque le conducteur relâche la pédale de frein, la pression hydraulique diminue et le piston se déplace dans la chambre vers sa position initiale de manière à écarter des plaquettes du disque de la roue.

Cependant, dans certains cas, le déplacement du piston ne se fait pas correctement et les plaquettes peuvent rester en contact, même léger, avec le disque de la roue. Ceci provoque une usure précoce des plaquettes et du disque, et peut entraîner une augmentation de la consommation de carburant.

Ce phénomène se rencontre avec les montages utilisés dans l'État de la Technique. Ils comprennent un joint de section rectangulaire et une gorge chanfreinée. Celle-ci est coûteuse à fabriquer. En outre, le rappel du piston n'est pas toujours efficace.

L'industrie a donc besoin de résoudre ces deux problèmes techniques. Elle doit le faire, si possible, en limitant les coûts de conception et de production.

L'invention a donc pour objet de proposer un joint de conception polyvalente, capable de résoudre les deux problèmes techniques précédents, en ne nécessitant que de simples ajustements de la structure du joint en fonction de l'utilisation qui en est faite, à savoir un joint monté pour un serrage axial pour les connecteurs d'un circuit de fluide, ou un joint monté pour un serrage radial pour les pistons hydrauliques à haute pression.

Ce joint d'étanchéité a pour but de permettre une amélioration de l'imperméabilité des connecteurs, sans augmentation des efforts nécessaires au serrage du joint d'étanchéité lors de son montage, et une amélioration de l'imperméabilité des pistons hydrauliques à haute pression, tout en assurant un rappel efficace du piston dans sa position de repos.

A cette fin, l'invention propose un joint combinant des zones de compression et des zones de flexion, entre lesquelles sont prévues des zones formant tampon s'opposant au passage du fluide, c'est-à-dire des zones ralentissant, voire empêchant, la diffusion du fluide entre le joint et les pièces mécaniques en diminuant la pression du fluide.

Plus précisément, la présente invention a pour objet un joint annulaire en matériau déformable élastiquement, présentant un axe de révolution et un axe transversal, et comprenant, en coupe transversale, une zone centrale d'épaisseur déterminée, présentant une face intérieure, tournée vers l'axe de révolution, une face extérieure en vis-à-vis, et deux faces latérales reliant les faces intérieure et extérieure, dans lequel :
- au moins une des faces latérales comprend au moins un lobe compressible, et
- l'une des faces extérieure ou intérieure porte deux lèvres susceptibles de fléchir agencées de part et d'autre de l'axe transversal et reliées chacune à une face latérale.
- les deux lèvres et ledit au moins un lobe présentent chacun une hauteur nominale déterminée par rapport à l'axe transversal du joint, la hauteur nominale d'au moins une des lèvres étant supérieure à la hauteur nominale dudit au moins un lobe ;
- ledit au moins un lobe est disposé à une distance minimum déterminée de la face intérieure ou extérieure ne portant pas les lèvres ;

Selon des modes de réalisation préférés :
- la face intérieure peut porter les deux lèvres susceptibles de fléchir agencées de part et d'autre de l'axe transversal et reliées chacune à une face latérale ;
- la face extérieure peut porter les deux lèvres susceptibles de fléchir agencées de part et d'autre de l'axe transversal et reliées chacune à une face latérale ;
- le joint peut comprendre au moins deux lobes de hauteurs différentes ;
- chaque face latérale peut porter un lobe agencé de sorte qu'un espace est ménagé entre le lobe et une des lèvres pour permettre la compression du lobe par fluage de matière ;
- le joint peut comprendre des bavures de plan de joint, disposées sensiblement parallèlement à l'axe transversal du joint ; et/ou
- la face intérieure ou extérieure ne portant pas les lèvres peut être sensiblement plane ou concave.

L'invention concerne également l'utilisation d'un joint selon l'invention dans un dispositif de connexion de deux conduites d'un fluide à une pression déterminée, placées dans un milieu extérieur à une pression déterminée, le dispositif de connexion comprenant une pièce mâle et une pièce femelle, dans laquelle le joint est monté pour un serrage axial dans une gorge de largeur déterminée de la pièce mâle, de telle sorte que :
- si la pression du milieu extérieur est supérieure à la pression du fluide, les deux lèvres sont portées par la face extérieure, et la face intérieure est en contact avec le fond de la gorge de la pièce mâle ; et que
- si la pression du fluide est supérieure à la pression du milieu extérieur, les deux lèvres sont portées par la face intérieure et sont en contact avec le fond de la gorge de la pièce mâle.

Selon des modes préférés d'utilisation :
- le rapport entre l'épaisseur nominale de la zone centrale du joint et une hauteur minimum de serrage entre les pièces mâle et femelle peut être typiquement inférieur à 1, de préférence compris entre 0,85 et 0,95 ;
- si la pression du milieu extérieur (P_{E}) est supérieure à la pression du fluide (P_{F}), le joint peut être monté sur la pièce mâle (20) avec une extension comprise entre environ 1% et 5% par rapport à sa taille nominale ;
- si la pression du fluide (P_{F}) est supérieure à la pression du milieu extérieur (P_{E}), le joint peut être monté sur la pièce femelle (30) avec une compression périphérique comprise entre environ 1% et 3% par rapport à sa taille nominale ; et/ou
- le joint peut présenter une largeur maximum de serrage, le rapport entre la largeur maximum de serrage et la largeur de la gorge est inférieur à 1, de préférence entre 0,75 et 0,85.

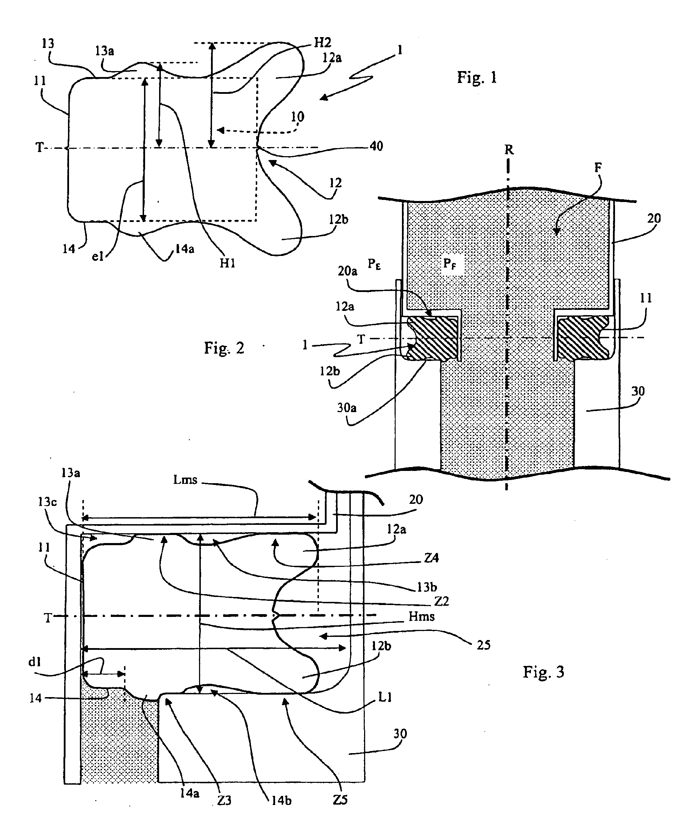

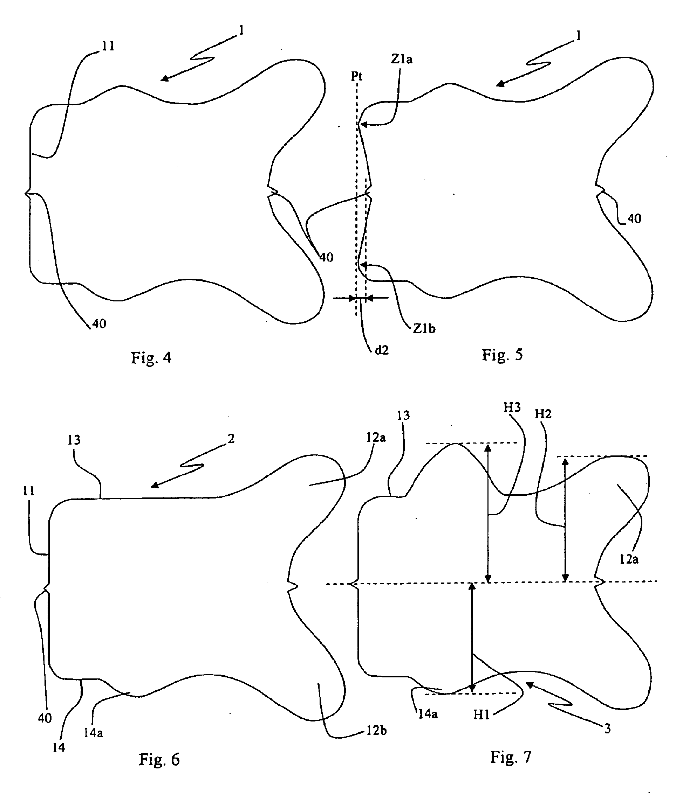

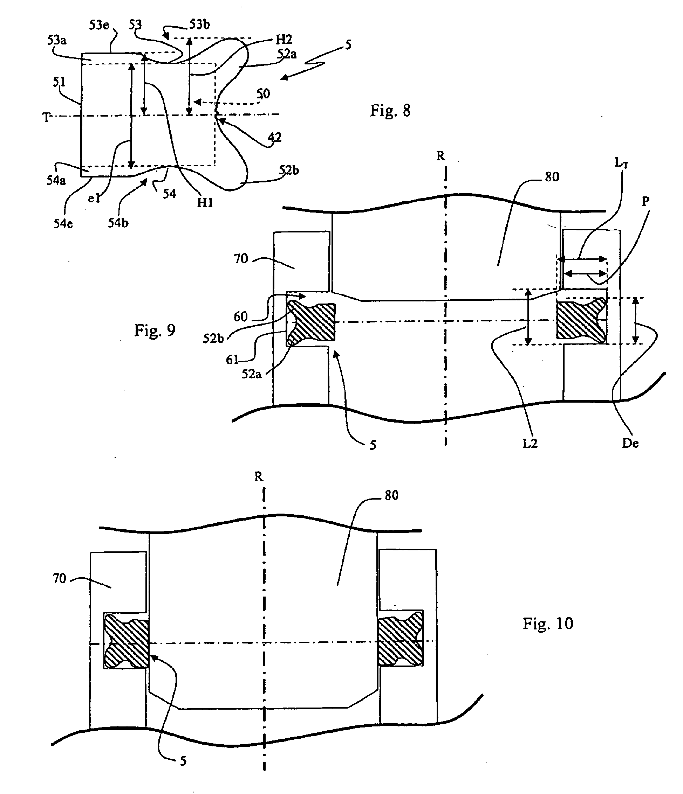

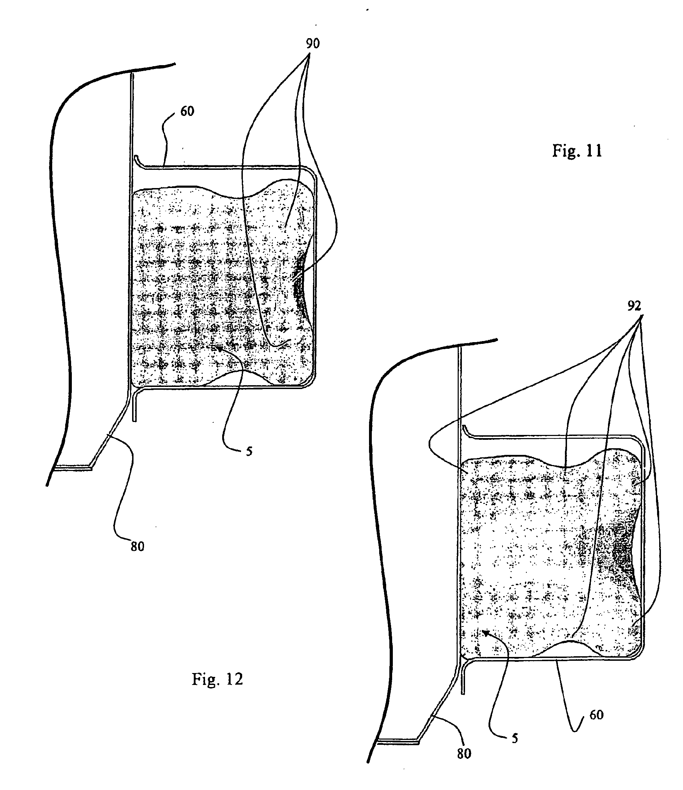

D'autres caractéristiques de l'invention ressortiront de la description détaillée ci-après faite en référence aux dessins annexés qui représentent, respectivement :
- en figure 1, une vue schématique d'une coupe transversale partielle d'un premier mode de réalisation d'un joint selon la présente invention ;
- en figure 2, une vue schématique en coupe transversale d'un joint selon la figure 1, monté entre deux pièces mécaniques mâle et femelle selon une première utilisation ;
- en figure 3, une vue schématique d'un détail de la figure 2 ;
- en figure 4, une vue schématique d'une coupe transversale partielle d'un deuxième mode de réalisation d'un joint selon la présente invention ;
- en figure 5, une vue schématique d'une coupe transversale partielle d'un troisième mode de réalisation d'un joint selon la présente invention ;
- en figure 6, une vue schématique d'une coupe transversale partielle d'un quatrième mode de réalisation d'un joint selon la présente invention ;
- en figure 7, une vue schématique d'une coupe transversale partielle d'un cinquième mode de réalisation d'un joint selon la présente invention ;
- en figure 8, une vue schématique d'une coupe transversale partielle d'un mode de réalisation non-revendiqué d'un joint ;
- en figures 9 et 10, des vues schématiques en coupe transversale d'un joint selon la figure 8, monté entre une chambre et un piston selon une deuxième utilisation ;
- en figure 11, une vue schématique d'une coupe transversale partielle de la figure 10, illustrant les contraintes principales en tension subies par le joint ; et
- en figure 12, une vue schématique d'une coupe transversale partielle de la figure 10, illustrant les contraintes principales en compression subies par le joint.

Dans la description ci-après, les termes suivants seront définis comme suit :
- Joint annulaire : joint ayant la forme d'un solide de révolution, la révolution pouvant être elliptique, circulaire, polygonale, etc., autour d'un axe de révolution situé au centre du joint ;
- Zone de flexion : zone du joint susceptible de se déplacer sous l'effet d'un effort ;
- Axe de révolution (R) = axe de révolution du joint ;
- Axe transversal (T) = axe perpendiculaire à l'axe de révolution ;
- Coupe transversale = coupe passant par un axe transversal et l'axe de révolution ;
- La hauteur d'un élément du joint est la distance entre le point le plus haut de cet élément et l'axe transversal du joint ;
- Taille (largeur, longueur, épaisseur, hauteur, etc.) « nominale » : taille (largeur, longueur, épaisseur, hauteur, etc.) au repos, lorsque le joint n'est pas utilisé.

Le joint décrit par la suite est en un matériau déformable élastiquement. De préférence, le matériau du joint peut être choisi parmi les matériaux polymères, en particulier parmi le FPM (caoutchouc fluorocarboné), le HNBR (caoutchouc nitrile hydrogéné), le AEM (copolymère d'éthylène et d'acrylate de méthyle), le ACM (copolymère d'éthylacrylate (ou autre acrylate) et d'un copolymère apportant des sites réactifs pour la vulcanisation), le NBR (caoutchouc nitrile) et le EPDM (terpolymère d'éthylène, de propylène ou d'un diène).

Un premier mode de réalisation d'un joint selon l'invention, illustré en figure 1, comprend, en coupe transversale, une zone centrale 10 d'épaisseur déterminée e1. Cette zone centrale 10 présente une face intérieure 11, tournée vers l'axe de révolution R (voir figure 2) du joint 1, une face extérieure 12, en vis-à-vis de la face 11 et donc tournée vers l'extérieur du joint. Les faces intérieure 11 et extérieure 12 sont reliées par deux faces latérales 13 et 14, s'étendant de part et d'autre d'un axe transversal T du joint 1.

Dans ce mode de réalisation, chaque face latérale 13-14 comprend un lobe compressible, respectivement 13a-14a. En outre, la face extérieure 12 porte deux lèvres déformables 12a-12b, agencées de part et d'autre de l'axe transversal T et reliées chacune à une face latérale respectivement 13a-14a. Ainsi, chaque lèvre est dans le prolongement d'une face latérale.

L'une seulement des faces extérieure 12 ou intérieure 11 porte les deux lèvres.

Selon l'invention, les lobes présentent chacun une hauteur nominale H1 par rapport à l'axe transversal T du joint 1, inférieure à la hauteur nominale H2 des lèvres par rapport à l'axe transversal T du joint 1.

La figure 2 illustre un exemple de montage pour un serrage axial du joint de la figure 1 entre une pièce mâle 20 et une pièce femelle 30 d'un dispositif de connexion de deux conduites d'un fluide F placées dans un milieu extérieur à une pression déterminée P_{E}. Le fluide F circule entre ces pièces à une pression P_{F}.

Dans cet exemple, la pression du fluide P_{F} est choisie inférieure à la pression du milieu extérieure P_{E}. Par exemple, le milieu extérieur est un fluide extérieur de pression P_{E}. Dans ce cas, les deux lèvres 12a, 12b sont portées par la face extérieure 12 et sont en contact avec la pièce femelle 30. La face intérieure 11 du joint 1 est disposée contre le fond de la gorge ouverte 20a de la pièce mâle 20, pour un serrage axial contre un épaulement 30a de la pièce femelle 30, c'est-à-dire sensiblement parallèlement à l'axe de révolution R.

Si la pression du fluide P_{F} est choisie supérieure à la pression du milieu extérieure P_{E}, les deux lèvres 12a, 12b sont portées par la face intérieure 11 et sont en contact avec le fond de la gorge ouverte 20a de la pièce mâle 20. La face extérieure 12 peut être en contact avec la pièce femelle 30.

Lors du montage, les pièces 20 et 30 sont rapprochées parallèlement à l'axe de révolution R. Les lèvres 12a-12b se déforment et se rapprochent de l'axe transversal T du joint. Se faisant, deux lignes d'étanchéité sont créées alors même que le joint n'est pas entièrement dans sa position d'utilisation. Lorsque les lèvres 12a-12b sont suffisamment déformées pour que les pièces 20-30 entrent en contact avec les lobes 13a-14a, une phase de compression de ces lobes commence, jusqu'à ce que les pièces 20-30 soient à une distance minimale de serrage et maintenues ainsi, en position d'utilisation. De préférence, la taille du joint 1, la hauteur nominale des lobes 13a-14a et la hauteur nominale des lèvres 12a-12b sont choisies pour que la zone centrale 10 du joint 1 ne soit pas comprimée lorsque les pièces 20-30 sont fixées l'une contre l'autre en position d'utilisation. Ainsi, on choisit l'épaisseur de la zone centrale du joint de telle sorte que le rapport entre cette épaisseur e₁ et la hauteur minimum de serrage Hms soit inférieur à 1 et, de préférence, compris entre 0,85 et 0,95.

De même, la gorge 20a présente une largeur L1 supérieure à la largeur maximum de serrage Lms du joint 1 pour assurer un positionnement optimal du joint et assurer une déformation efficace des lèvres 12a, 12b. Ainsi, les lèvres du joint sont dimensionnées de sorte que le rapport entre la largeur maximum de serrage Lms et la largeur L1 de la gorge dans laquelle le joint est destiné à être monté est inférieur à 1 et, de préférence entre 0,75 et 0,85. Ce rapport est à ajuster pour chaque application en fonction des contraintes dimensionnelles de l'assemblage.

Dans la présente description, la largeur maximum de serrage Lms est la distance entre la face intérieure 11 du joint et l'extrémité extérieure des lèvres en projection sur l'axe transversal T du joint lorsque les deux pièces mécaniques sont espacées d'une hauteur minimum de serrage, cette dernière étant telle que la partie centrale du joint n'est pas compressée.

Selon l'invention, la distance entre les lobes et les lèvres est choisie pour que, lors de la compression, la matière constitutive des lobes puisse fluer librement dans les espaces 13b-14b qui sépare respectivement le lobe 13a-14a de la lèvre 12a-12b. Ainsi, la compression n'est que peu ou pas transmise à la zone centrale 10 du joint, tout en assurant une zone d'étanchéité étendue.

Selon l'invention, les lobes sont disposés à une distance nominale minimale d1 de la face intérieure 11. Cette distance d1 est choisie pour éviter que le lobe 14a ne soit coincé dans le jeu 25, ce jeu étant nécessaire pour permettre un assemblage aisé des deux pièces mécaniques 20-30.

Le joint selon l'invention présente donc cinq zones de contact à savoir, dans l'exemple illustré en figures 1 et 2, la zone de contact Z₁ entre la face intérieure 11 sensiblement plane et la pièce 20, les zones de contact Z₂-Z₃ entre les lobes 13a-14a et, respectivement, les pièces 20-30, et les zones de contact Z₄-Z₅ entre les lèvres 12a-12b et, respectivement, les pièces 20 et 30. La surface de contact entre le joint et les pièces 20-30 est supérieure à celle qui serait obtenue en utilisant un joint torique, par exemple.

La zone Z₁ est une zone de compression faible du joint due à l'extension du joint. La fonction principale de Z₁ est d'assurer un positionnement correct du joint dans la gorge 20a, mais Z₁ contribue également à l'étanchéité et donc à l'amélioration de l'imperméabilité.

Les zones Z₂ et Z₃ sont des zones de compression, où la force d'interaction entre le joint et la pièce mécanique est importante. L'imperméabilité au passage du fluide F est assurée par un fluage du matériau, sous l'effet de la compression, dans la rugosité de surface des pièces 30 et 20 formant la gorge.

Les zones Z₄ et Z₅ sont des zones de flexion du joint où la force d'interaction entre le joint et les pièces 20 et 30 est moins importante que dans les zones Z₂-Z₃. Cependant, ceci peut être compensé en dimensionnant les lèvres de telle sorte que la surface de contact soit plus importante dans les zones Z₄-Z₅ que dans les zones Z₂-Z₃ pour assur er également une bonne imperméabilité au fluide, sans pour autant entraîner une déformation des pièces 20 et 30. En outre, ces zones Z₄ et Z₅ sont du côté du joint où la pression du fluide est la plus forte. Ainsi, dans l'exemple illustré en figure 2, le joint est conformé pour un montage où la pression P_{E} du milieu extérieur a été choisie supérieure à la pression P_{F} du fluide F. Le milieu extérieur peut, par exemple, être constitué par un fluide extérieur.

L'espace 13b-14b joue un rôle tampon améliorant l'imperméabilité du joint. En effet, si du fluide extérieur réussit à diffuser entre la pièce 30 et la lèvre 12b, il commence par remplir l'espace 14b avant de pouvoir diffuser sous le lobe 14a, car la pression du fluide extérieur au sein de cet espace 14b est inférieure à la pression du fluide extérieur dans l'espace de jeu 25. La diffusion du fluide extérieur dans la zone Z₅ est limitée.

De même, si le fluide extérieur réussit à diffuser entre la pièce 20 et la lèvre 12a à travers la zone de flexion Z₄, il commence par remplir l'espace 13b avant de pouvoir réussir à diffuser entre le lobe 13a et la pièce 20 au niveau de la zone de compression Z₂. Si, malgré tout, le fluide extérieur réussit à diffuser à travers la zone Z₂, il commerce par remplir l'espace 13a avant de pouvoir diffuser entre la face intérieure 11 et la pièce 20 à travers la zone de flexion Z₁, et contaminer ainsi le fluide intérieur F de pression P_{F} inférieure.

La combinaison de zones de compression Z₂-Z₃ avec des zones de flexion _{Z}4-_{Z}5 permet d'améliorer l'imperméabilité du joint, tout en facilitant le montage du joint et le serrage des pièces mécaniques 20-30 entre elles. En effet, la force nécessaire pour déformer les lèvres est inférieure à la force nécessaire pour comprimer les lobes.

Selon le mode de réalisation illustré en figure 4, le joint 1 porte des bavures 40 de plan de joint qui sont des défauts inévitables de fabrication.

En choisissant une fabrication à l'aide d'un moule en deux parties de sorte que les bavures 40 soient sensiblement parallèles à l'axe transversal T, les bavures sont disposées en dehors des zones de compression Z₂-Z₃ et des zones de déformation Z₄-Z₅, et donc dans une partie du joint qui n'assure aucun rôle fonctionnel. Une tolérance plus importante pour les bavures est donc possible, ce qui réduit les coûts de fabrication. L'utilisation d'un moule en deux parties présente aussi un avantage économique. De préférence, l'axe transversal T est dans le plan de joint, de sorte que les bavures 40 sont alignées selon l'axe transversal T, favorisant ainsi le démoulage. Les lèvres 12a-12b sont donc disposées de part et d'autre du plan de joint.

Lorsque le joint 1 est monté de manière semblable au montage illustré en figure 2, il peut être souhaitable que les bavures de plan de joint ne gênent pas l'application de la face intérieure 11 du joint contre le fond de la gorge 20a de la pièce 20. Pour ce faire, le mode de réalisation illustré en figure 5 présente un joint 1 comprenant une face intérieure 11 concave de telle sorte que la bavure 40 ne dépasse pas les zones d'application Z₁ₐ et Z_{1b} de la face intérieure 11 contre la pièce 20. De préférence, la bavure 40 est située à une distance minimum d2 du plan tangent Pt aux zones Z₁ₐ et Z_{1b}. Dans ce mode de réalisation, l'étirement peut être plus élevé et de ce fait les pressions de contact augmentées au niveau des zones Z₁ₐ et Z_{1b} tout en créant une zone tampon supplémentaire pour freiner la diffusion du fluide extérieur et ainsi augmenter encore l'imperméabilité.

Selon le mode de réalisation illustré en figure 6, le joint 2 peut ne comprendre qu'une seule face latérale 14 présentant un lobe 14a. Ainsi, dans un montage semblable à celui illustré en figure 2, le joint 2 illustré en figure 6 ne ménage qu'un seul espace 13c entre la face latérale 13, la pièce 20 et la lèvre 12a. Cet espace joue, comme expliqué pour les figures 2 et 3, un rôle de tampon.

Pour s'assurer que le joint 2 s'oppose au passage du fluide extérieur entre la pièce 20 et la face intérieure 11, le joint peut être monté sur la pièce 20 avec une extension de l'ordre de 1% à 5% par rapport à sa taille nominale. Ce montage en extension peut être fait pour tous les modes de réalisation décrits aux figures 1 à 7. Ainsi, le joint est comprimé contre la pièce 20 au niveau de la face 11. Afin que la bavure 40 ne gêne pas cette compression, il est également possible de prévoir que le joint 2 présente, comme illustré en figure 5, une face intérieure 11 concave. Une extension minimale est souhaitable pour assurer un positionnement du joint efficace.

Plus généralement, si la pression du milieu extérieure P_{E} est supérieure à la pression du fluide P_{F}, le joint est monté sur la pièce mâle 20 avec une extension comprise entre environs 1% et 5% par rapport à sa taille nominale. Mais si la pression du fluide P_{F} est supérieure à la pression du milieu extérieure P_{E}, le joint est monté sur la pièce femelle 30 avec une compression périphérique comprise entre environs 1% et 3% par rapport à sa taille nominale.

Selon un autre mode de réalisation, le joint peut être conçu pour favoriser les forces de compression par rapport aux forces de flexion. Ce mode de réalisation est illustré en figure 7 où le joint 3 présente, sur l'une de ses faces latérales 13, un lobe 13a dont la hauteur H₃ est supérieure à la hauteur H₂ de la lèvre 12a, et un lobe 14a dont la hauteur H₁ est inférieure à la hauteur H₃ du lobe 13a. D'une manière plus générale, le joint selon l'invention peut comprendre au moins deux lobes de hauteurs différentes, supérieure(s) ou inférieure(s) à la hauteur H2 des lèvres.

Grâce au joint selon l'invention, la surface de contact entre les pièces mécaniques 20-30 et le joint 1-2-3 est plus importante que pour un joint de l'état de l'art et ce pour un même effort de serrage. Cela entraîne de meilleures performances d'imperméabilité sans entraîner de déformations des pièces 20-30, comme dans le cas où ces pièces sont en plastiques. En outre, ce serrage plus important au niveau des zones de compression Z₂-Z₃ et des zones de flexion Z₄-Z₅, améliore l'imperméabilité du joint par rapport aux joints de l'état de la technique.

Enfin, les efforts nécessaires au serrage du joint sont plus faibles et le risque de déformation plastique des éléments composant la gorge est réduit par rapport aux joints de l'état de la technique.

Le joint selon l'invention permet également d'assurer l'étanchéité de pièces avec de larges tolérances dimensionnelles, tolérances de forme ou de position des éléments composant la gorge dans laquelle le joint est placé. Ainsi, la largeur, la hauteur, et la distance des lobes par rapport à la face intérieure 11, peuvent être dimensionnées de manière à assurer l'étanchéité entre deux pièces dans une large gamme de tolérance et de jeu entre ces deux pièces. En d'autres termes, la position des lobes est adaptée pour assurer l'étanchéité entre les deux pièces mécaniques à des positions déterminées, distantes des espaces de jeu entre les pièces. Les parties du joint destinées à assurer l'étanchéité sont donc situées en dehors des espaces de jeu, de sorte que la longueur de contact réelle entre le joint et les pièces mécaniques est optimisée par rapport aux joints connus.

D'autre part, une fois leur position choisie, la hauteur nominale des lobes peut être adaptée à la résistance mécanique des pièces. Ainsi, si un lobe est situé dans une zone où l'une des pièces présente une faible résistance (par exemple la zone plane de la pièce 20 en regard de la zone Z₂ de la figure 3), la hauteur nominale du lobe peut être suffisamment faible pour assurer l'étanchéité tout en limitant la contrainte contre la pièce. Au contraire, si le lobe est situé dans une zone où l'une des pièces présente une forte résistance (par exemple l'angle de la pièce 30 en regard de la zone Z₃ de la figure 3), la hauteur nominale du lobe peut être plus importante pour augmenter la force de compression et donc l'imperméabilité. Il en va de même pour le dimensionnement des lèvres qui permettent une grande surface de contact tout en réduisant les forces de compression. La hauteur nominale de chaque lèvre peut également être adaptée.

Enfin, dans le montage pour un serrage axial, le joint selon l'invention n'est pas sensible au phénomène de basculement ou de roll-back.

Le joint permet également une utilisation non-revendiquée pour assurer une étanchéité entre une chambre et un piston monté mobile dans cette chambre, par exemple pour une application freinage.

Selon le mode de réalisation non-revendiqué illustré en figure 8, le joint 5 est préférentiellement adapté pour maximiser la longueur de contact entre le joint et le piston. Ainsi, chaque face latérale 53, 54 porte un lobe 53a, 54a disposé dans le prolongement de la face intérieure 51. Dans ce mode de réalisation, il n'existe donc aucune distance minimum entre chaque lobe 53a, 54a et la face intérieure 51, contrairement à l'invention.

En outre, chaque lobe 53a, 54a est agencé de sorte qu'un espace 53b, 54b est ménagé entre ledit lobe 53a, 54a et une des lèvres 52a, 52b pour permettre la compression du lobe par fluage de matière.

L'utilisation d'un tel joint est illustrée dans les figures 9 et 10. Le joint 5 est monté pour un serrage radial dans une gorge 60, de hauteur déterminée L2 et de profondeur déterminée P, de la chambre 70. Les lèvres 52a, 52b sont destinées à entrer en contact avec le fond 61 de la gorge 60, et la face intérieure 51 de la zone centrale 50 est destinée à entrer en contact avec le piston 80.

De préférence, la face intérieure 51 est plane et sensiblement dépourvue de bavure de plan de joint. Pour ce faire, il est possible d'utiliser un procédé de cryogénie des bavures. Par dépourvu, on comprend que le joint a été fabriqué sans bavure ou a subit une opération d'ablation des bavures, dans les limites de tolérance des procédé de fabrication et à des coûts raisonnables pour la production industrielle des joints. Autrement dit, la face intérieure 51 peut comprendre des résidus de bavures ou des bavures très réduites ne gênant pas l'application du joint contre le piston 80.

Le rapport entre la profondeur P de la gorge et la longueur transversale nominale L_{T} du joint, est typiquement inférieur à 1, de préférence compris entre 0,75 et 0,95.

De préférence, les lobes 53a, 54a présentent une face latérale 53e, 54e sensiblement parallèle aux bords de la gorge. Ceci évite le vrillage du joint lorsque le piston 80 coulisse dans la chambre 70.

Ainsi, sous l'action de la pression hydraulique, le piston 80 se déplace et entraîne le joint qui se déforme dans le sens du déplacement du piston.

Comme illustré aux figures 11 et 12, des parties du joint sont étirées : parties 90 de la figure 11, alors que d'autres parties sont comprimées : parties 92 de la figure 12.

Lorsque la pression diminue, la zone rectangulaire massive formée par les faces 53e, 54e et 11 assure la reprise élastique du piston. Le joint retourne ainsi à sa position initiale et entraîne avec lui le piston. Le rappel du piston est ainsi assuré.

En fonction de la matière choisie et donc de ses caractéristiques mécaniques (allongement, résistance à la rupture, résistance au déchirement, etc.), il est possible d'optimiser le fonctionnement du joint en augmentant ou réduisant la zone massive constituée par les lobes 53a, 54a et la zone centrale 50. Par exemple, un matériau de dureté 60 Shore se déforme davantage sous l'action de la pression mais les énergies de déformation sont plus faibles et le phénomène de rappel élastique du piston sera moins important.

Plus la pression augmente, plus la dureté du joint doit augmenter. Cependant, la dureté ne doit pas empêcher la déformation du joint et donc le rappel élastique du piston. Par exemple, pour une pression de 70 bars, une dureté comprise entre 70 et 75 shore A convient.

De préférence, les lèvres 52a 52b ont une rigidité plus élevée que pour l'utilisation en piston décrite préalablement, afin de pouvoir résister mécaniquement à de hautes pressions (100 bars - 140 bars) tout en assurant le rappel du piston. Pour augmenter la rigidité des lèvres, il est possible d'augmenter la section des lèvres, de diminuer la profondeur de l'espace entre les lèvres et/ou de diminuer la profondeur des espaces 53b, 54b.

Les lèvres 52a, 52b du joint permettent de réduire les efforts d'emboîtements et d'assurer un bon positionnement du joint.

Les espaces 53b et 54b permettent aux lèvres 52a et 52b de se déformer lors de la phase de serrage

L'espace entre les lèvres 52a-52b permet d'assurer un bon positionnement du joint.

Les faces 53e et 54e sont reliées, de préférence, à la face 51 par des rayons très faibles. L'intérêt est à la fois technique (éviter des défauts d'aspect sur les pièces lors du démoulage) et économique (faciliter la réalisation des outillages).

Le rapport entre la hauteur de la gorge L2 et la somme, De, des hauteurs nominales H2 des lèvres 52a et 52b, peut être typiquement inférieur à 1, de préférence compris entre 0,6 et 0,85. Dans ce cas, la hauteur De du bord extérieur du joint est donc légèrement supérieure à la hauteur L2 de la gorge, ce qui permet que le joint 5 soit plaqué dans la gorge et qu'il ne vrille pas lors du coulissement du piston.

Ainsi, avec un joint selon l'invention, il est possible de résoudre les deux problèmes techniques d'étanchéité de connecteur et de rappel de piston hydraulique. Ceci est permis par la structure du joint et la façon dont il est monté.

En montage pour un serrage axial, le joint selon l'invention est insensible au phénomène de Roll-back et permet d'augmenter significativement l'imperméabilité de connecteurs tout en diminuant la force nécessaire à l'emboîtement des pièces.

En montage pour un serrage radial, le joint selon l'invention assure l'étanchéité du montage grâce à la déformabilité des lèvres 52a, 52b, et la grande surface de contact constituée par la surface intérieure 51 et les bords des lobes dans le prolongement de cette surface 51, tout en limitant les forces de compression. En outre, il assure une fonction de rappel élastique du piston dans la chambre.

Selon d'autres modes de réalisation :
- le joint peut être asymétrique par rapport à l'axe transversal et, notamment, l'une des faces latérales peut être oblique par rapport à l'axe transversal ;
- chaque face latérale peut comprendre plusieurs lobes, éventuellement de tailles différentes, afin de multiplier les zones de contact et les zones tampon pour améliorer l'étanchéité des connecteurs.

## Revendications

1. Joint annulaire (1, 2, 3, 5) en matériau déformable élastiquement, présentant un axe de révolution (R) et un axe transversal (T), et comprenant, en coupe transversale, une zone centrale (10, 50) d'épaisseur déterminée (e1), présentant une face intérieure (11, 51), tournée vers l'axe de révolution (R), une face extérieure (12, 52) en vis-à-vis, et deux faces latérales (13, 14, 53, 54) reliant les faces intérieure (11, 51) et extérieure (12, 52), dans lequel :
- au moins une des faces latérales (13, 14, 53, 54) comprenant au moins un lobe compressible (13a, 14a, 53a, 54a) ;
- l'une des faces extérieure (12, 52) ou intérieure (11, 51) portant deux lèvres susceptibles de fléchir (12a, 12b, 52a, 52b) agencées de part et d'autre de l'axe transversal (T) et reliées chacune à une face latérale (13, 14, 53, 54) ;
- ledit au moins un lobe (13a, 14a) est disposé à une distance minimum déterminée (d1) de la face intérieure (11) ou extérieure (12) ne portant pas les lèvres ;
**caractérisé en ce que** les deux lèvres (12a, 12b) et ledit au moins un lobe (13a, 14a) présentent chacun une hauteur nominale déterminée (H1, H2) par rapport à l'axe transversal (T) du joint, la hauteur nominale (H2) d'au moins une des lèvres étant supérieure à la hauteur nominale (H1) dudit au moins un lobe (13a, 14a).

2. Joint annulaire (1, 2, 3, 5) selon la revendication 1, dans lequel la face intérieure (11, 51) porte les deux lèvres susceptibles de fléchir (12a, 12b, 52a, 52b) agencées de part et d'autre de l'axe transversal (T) et reliées chacune à une face latérale (13, 14, 53, 54).

3. Joint annulaire (1, 2, 3, 5) selon la revendication 1, dans lequel la face extérieure (12, 52) porte les deux lèvres susceptibles de fléchir (12a, 12b, 52a, 52b) agencées de part et d'autre de l'axe transversal (T) et reliées chacune à une face latérale (13, 14, 53, 54).

4. Joint annulaire d'étanchéité selon l'une quelconque des revendications 1 à 3, comprenant au moins deux lobes (13a, 14a) de hauteurs (H3, H1) différentes.

5. Joint annulaire d'étanchéité selon l'une quelconque des revendications 1 à 4, dans lequel chaque face latérale (13, 14) porte un lobe (13a, 14a) agencé de sorte qu'un espace (13b, 14b) est ménagé entre le lobe (13a, 14a) et une des lèvres (12a, 12b) pour permettre la compression du lobe (13a, 14a) par fluage de matière.

6. Joint annulaire d'étanchéité selon l'une quelconque des revendications 1 à 5, comprenant des bavures (40) de plan de joint, disposées sensiblement parallèlement à l'axe transversal (T) du joint.

7. Joint annulaire d'étanchéité selon l'une quelconque des revendications 1 à 6, dans lequel la face intérieure (11) ou extérieure (12) ne portant pas les lèvres est sensiblement plane.

8. Joint annulaire d'étanchéité selon l'une quelconque des revendications 1 à 6, dans lequel la face intérieure (11) ou extérieure (12) ne portant pas les lèvres est concave.

9. Utilisation d'un joint annulaire selon l'une quelconque des revendications 1 à 8, dans un dispositif de connexion de deux conduites d'un fluide à une pression déterminée (P_{F}), placées dans un milieu extérieur à une pression déterminée (P_{E}), le dispositif de connexion comprenant une pièce mâle (20) et une pièce femelle (30), dans laquelle le joint est monté pour un serrage axial dans une gorge de largeur déterminée (L1) de la pièce mâle (20), de telle sorte que :
- si la pression du milieu extérieure (P_{E}) est supérieure à la pression du fluide (P_{F}), les deux lèvres (12a, 12b) sont portées par la face extérieure (12), et la face intérieure (11) est en contact avec le fond de la gorge (20a) de la pièce mâle (20) ; et que
- si la pression du fluide (P_{F}) est supérieure à la pression du milieu extérieure (P_{E}), les deux lèvres (12a, 12b) sont portées par la face intérieure (11) et sont en contact avec le fond de la gorge (20a) de la pièce mâle (20).

10. Utilisation selon la revendication 9, dans laquelle le rapport entre l'épaisseur nominale (e1) de la zone centrale (10) du joint et une hauteur minimum de serrage (Hms) entre les pièces mâle et femelle (20, 30) est typiquement inférieur à 1, de préférence compris entre 0,85 et 0,95.

11. Utilisation selon l'une quelconque des revendications 9 ou 10, dans laquelle :
- si la pression du milieu extérieure (P_{E}) est supérieure à la pression du fluide (P_{F}), le joint est monté sur la pièce mâle (20) avec une extension comprise entre environs 1 % et 5% par rapport à sa taille nominale ; et
- si la pression du fluide (P_{F}) est supérieure à la pression du milieu extérieure (P_{E}), le joint est monté sur la pièce femelle (30) avec une compression périphérique comprise entre environs 1% et 3% par rapport à sa taille nominale.

12. Utilisation selon l'une quelconque des revendications 9 à 11, dans laquelle le joint présente une largeur maximum de serrage (Lms), le rapport entre la largeur maximum de serrage (Lms) et la largeur (L1) de la gorge est inférieur à 1, de préférence entre 0,75 et 0,85.

## Claims

1. An annular gasket (1, 2, 3, 5) of elastically deformable material presenting an axis of revolution (R) and a transverse axis (T), and comprising, in cross-section, a central zone (10, 50) of determined thickness (e1), presenting an inside face (11, 51) facing towards the axis of revolution (R), an outside face (12, 52) opposite therefrom, and two side faces (13, 14, 53, 54) interconnecting the inside and outside faces (11, 51 and 12, 52), wherein:
· at least one of the side faces (13, 14, 53, 54) includes at least one compressible lobe (13a, 14a, 53a, 54a);
· one of the outer and inner faces (12, 52 and 11, 51) carries two lips suitable for bending (12a, 12b, 52a, 52b) that are arranged on either side of the transverse axis (T) and each of which is connected to a respective one of the side faces (13, 14, 53, 54);
said at least one lobe (13a, 14a) is located at a determined minimum distance (d1) from the inside or outside face (11 or 12) that does not carry the lips;
**characterized in that** both lips (12a, 12b) and said at least one lobe (13a, 14a) present respective determined nominal heights (H1, H2) relative to the transverse axis (T) of the gasket, the nominal height (H2) of at least one of the lips being greater than the nominal height (H1) of said at least one lobe (13a, 14a).

2. An annular gasket (1, 2, 3, 5) according to claim 1, wherein the inside face (11, 51) carries the two lips suitable for bending (12a, 12b, 52a, 52b) that are arranged on either side of the transverse axis (T) and each of which is connected to a respective one of the side faces (13, 14, 53, 54).

3. An annular gasket (1, 2, 3, 5) according to claim 1, wherein the outside face (12, 52) carries the two lips suitable for bending (12a, 12b, 52a, 52b) that are arranged on either side of the transverse axis (T) and each of which is connected to a respective one of the side faces (13, 14, 53, 54).

4. An annular sealing gasket according to any one of claims 1 to 3, having at least two lobes (13a, 14a) of different heights (H3, H1).

5. An annular sealing gasket according to any one of claims 1 to 4, wherein each side face (13, 14) carries a respective lobe (13a, 14a) arranged so that a space (13b, 14b) is provided between the lobe (13a, 14a) and a respective one of the lips (12a, 12b) so as to enable the lobe (13a, 14a) to be compressed by material creep.

6. An annular sealing gasket according to any one of claims 1 to 5, including flash (40) in a mold-separation plane, the flash being disposed substantially parallel to the transverse axis (T) of the gasket.

7. An annular sealing gasket according to any one of claims 1 to 6, wherein the inside or outside face (11 or 12) that does not carry the lips is substantially plane.

8. An annular sealing gasket according to any one of claims 1 to 6, wherein the inside or outside face (11 or 12) that does not carry the lips is concave.

9. The use of an annular gasket according to any one of claims 1 to 8, in a device for connecting together two pipes for a fluid at a determined pressure (P_{F}), the pipes being placed in an outside medium at a predetermined pressure (P_{E}), the connection device comprising a male part (20) and a female part (30), wherein the gasket is mounted to be squeezed axially in a groove of determined width (L1) in the male part (20), in such a manner that:
· if the pressure (P_{E}) of the outside medium is greater than the pressure (P_{F}) of the fluid, the two lips (12a, 12b) are carried by the outside face (12) and the inside face (11) is in contact with the bottom of the groove (20a) in the male part (20); and
· if the pressure (P_{F}) of the fluid is greater than the pressure (P_{E}) of the outside medium, the two lips (12a, 12b) are carried by the inside face (11) and are in contact with the bottom of the groove (20a) in the male part (20).

10. The use according to claim 9, wherein the ratio of the nominal thickness (e1) of the central zone (10) of the gasket divided by a minimum squeezing height (Hms) between the male and female parts (20, 30) is typically less than 1, preferably lying in the range 0.85 to 0.95.

11. The use according to claim 9 or claim 10, wherein:
· if the pressure (P_{E}) of the outside medium is greater than the pressure (P_{F}) of the fluid, the gasket is mounted on the male part (20) with extension lying in the range about 1% to 5% relative to its nominal size; and
· if the pressure (P_{F}) of the fluid is greater than the pressure of the outside medium (P_{E}), the gasket is mounted on the female part (30) with peripheral compression lying in the range about 1% to 3% relative to its nominal size.

12. The use according to any one of claims 9 to 11, wherein the gasket presents a maximum squeezing width (Lms), and the ratio of the maximum squeezing width (Lms) divided by the width (L1) of the groove is less than 1, preferably lying in the range 0.75 to 0.85.

## Patentansprüche

1. Ringdichtung (1, 2, 3, 5) aus elastisch verformbarem Material, die eine Rotationsachse (R) und eine Querachse (T) hat und im Querschnitt einen mittleren Bereich (10, 50) mit bestimmter Dicke (e1) aufweist, der eine Innenfläche (11, 51), die zur Rotationsachse (R) gedreht ist, eine gegenüberliegende Außenfläche (12, 52) und zwei Seitenflächen (13, 14, 53, 54), die die Innenfläche (11, 51) und Außenfläche (12, 52) verbinden, hat, wobei
- zumindest eine der Seitenflächen (13, 14, 53, 54) zumindest einen kompressiblen Flügel (13a, 14a, 53a, 54a) aufweist,
- wobei eine der Flächen Außenfläche (12, 52) oder Innenfläche (11, 51) zwei Lippen (12a, 12b, 52a, 52b), die zum Biegen in der Lage sind und die auf beiden Seiten der Querachse (T) angeordnet sind und von denen jede mit einer Seitenfläche (13, 14, 53, 54) verbunden ist, trägt,
- wobei zumindest ein Flügel (13a, 14a) mit einem bestimmten minimalen Abstand (d1) von der Innenfläche (11) oder Außenfläche (12), die die Lippen nicht trägt, angeordnet ist,
**dadurch gekennzeichnet, dass** die zwei Lippen (12a, 12b) und der zumindest eine Flügel (13a, 14a) jeweils eine bestimmte nominale Höhe (H1, H2) in Bezug auf die Querachse (T) der Dichtung aufweisen, wobei die nominale Höhe (H2) von zumindest einer der Lippen höher als die nominale Höhe (H1) des zumindest einen Flügels (13a, 14a) ist.

2. Ringdichtung (1, 2, 3, 5) nach Anspruch 1, wobei die Innenfläche (11, 51) die zwei Lippen (12a, 12b, 52a, 52b) trägt, die zum Biegen in der Lage sind und die auf beiden Seiten der Querachse (T) angeordnet sind und von denen jede mit einer Seitenfläche (13, 14, 53, 54) verbunden ist.

3. Ringdichtung (1, 2, 3, 5) nach Anspruch 1, wobei die Außenfläche (12, 52) die zwei Lippen (12a, 12b, 52a, 52b) trägt, die zum Biegen in der Lage sind und die auf beiden Seiten der Querachse (T) angeordnet sind und von denen jede mit einer Seitenfläche (13, 14, 53, 54) verbunden ist.

4. Ringförmige Dichtungsvorrichtung nach einem der Ansprüche 1 bis 3, die zumindest zwei Flügel (13a, 14a) mit unterschiedlichen Höhen (H3, H1) aufweist.

5. Ringförmige Dichtungsvorrichtung nach einem der Ansprüche 1 bis 4, wobei jede Seitenfläche (13, 14) einen Flügel (13a, 14a) trägt, der in der Art angeordnet ist, dass ein Raum (13b, 14b) zwischen dem Flügel (13a, 14a) und einer der Lippen (12a, 12b) vorgesehen ist, um die Kompression des Flügels (13a, 14a) durch Materialkriechen zu gestatten.

6. Ringförmige Dichtungsvorrichtung nach einem der Ansprüche 1 bis 5, die Grate (40) der Dichtungsebene aufweist, die im Wesentlichen parallel zur Querachse (T) der Dichtung angeordnet sind.

7. Ringförmige Dichtungsvorrichtung nach einem der Ansprüche 1 bis 6, wobei die Innenfläche (11) oder Außenfläche (12), die nicht die Lippen trägt, im Wesentlichen eben ist.

8. Ringförmige Dichtungsvorrichtung nach einem der Ansprüche 1 bis 6, wobei die Innenfläche (11) oder Außenfläche (12), die nicht die Lippen trägt, konkav ist.

9. Verwendung einer ringförmigen Dichtung nach einem der Ansprüche 1 bis 8, in einer Vorrichtung zur Verbindung von zwei Rohrleitungen für ein Fluid mit einem bestimmten Druck (P_{F}), die in einer äußeren Umgebung mit einem bestimmten Druck (P_{E}) angeordnet sind, wobei die Verbindungsvorrichtung ein hervorstehendes Stück (20) und ein aufnehmendes Stück (30) aufweist, wobei die Dichtung durch ein axiales Drücken bzw. Spannen in eine Ausnehmung mit bestimmter Breite (L1) des hervorstehenden Stücks (20) montiert wird, in der Weise, dass,
- wenn der Druck der äußeren Umgebung (P_{E}) oberhalb des Fluiddrucks (P_{F}) ist, die zwei Lippen (12a, 12b) durch die äußere Fläche (12) getragen sind und die innere Fläche (11) mit dem Boden der Ausnehmung (20a) des hervorstehenden Stücks (20) in Berührung ist, und dass
- wenn der Fluiddruck (P_{F}) oberhalb des Drucks (P_{E}) der äußeren Umgebung ist, die zwei Lippen (12a, 12b) durch die Innenfläche (11) getragen sind und mit dem Boden der Ausnehmung (20a) des hervorstehenden Stücks (20) in Berührung sind.

10. Verwendung nach Anspruch 9, bei der das Verhältnis zwischen der nominalen Dicke (e1) des mittleren Bereiches (10) der Dichtung und einer minimalen Spannhöhe (Hms) zwischen dem hervorstehenden Stück (20) und dem aufnehmenden Stück (30) typischerweise kleiner als 1, vorzugsweise zwischen 0,85 und 0,95, ist.

11. Verwendung nach einem der Ansprüche 9 und 10, bei der
- wenn der Druck (P_{E}) der äußeren Umgebung größer als der Fluiddruck (P_{F}) ist, die Dichtung an dem hervorstehenden Stück (20) mit einem Dehnen zwischen ungefähr 1 % und 5% in Bezug auf ihre nominale Größe montiert wird, und
- wenn der Fluiddruck (P_{F}) größer als der Druck (P_{E}) der äußeren Umgebung ist, die Dichtung an dem aufnehmenden Teil (30) mit einer Umfangskompression zwischen ungefähr 1 % und 3% in Bezug auf ihre nominale Größe montiert wird.

12. Verwendung nach einem der Ansprüche 9 bis 11, wobei die Dichtung eine maximale Spannbreite (Lms) aufweist, wobei das Verhältnis zwischen der maximalen Spannbreite (Lms) und der Breite (L1) der Ausnehmung kleiner als 1, vorzugsweise zwischen 0,75 und 0,85 ist.
